# EUROPEAN PATENT SPECIFICATION

(11) **EP 0 924 940 B1**
(45) Date of publication and mention of the grant of the patent: **19.03.2003**
(21) Application number: 97122496.9
(22) Date of filing: 19.12.1997
(51) Int. Cl.: H04Q 3/00, H04M 7/00

(54) **Apparatus and method for controlling basic and supplementary subscriber service in a telephone system**
Vorrichtung und Verfahren zur Steuerung von Basis- und Zusatzdienste in einem Telefonsystem
Dispositif et méthode de commande de services de base et de services supplémentaires dans un système téléphonique

(43) Date of publication of application: 23.06.1999
(73) Proprietor: TELEFONAKTIEBOLAGET LM ERICSSON, 126 25 Stockholm (SE)
(72) Inventor: Nielsen, Lars, 2650 Hvidovre (DK); Thorarensen, Ingimundur, 2300 Copenhagen S (DK); Damm, Claus, 2300 Copenhagen S (DK)
(74) Representative: Roerboel, Leif

(56) References cited:
- EP-A- 0 669 748
- EP-A- 0 833 488
- WO-A-97/22211
- WO-A-97/23988
- WO-A-97/28553
- WO-A-97/44943
- LOW C ET AL: "WEBIN - AN ARCHITECTURE FOR FAST DEPLOYMENT OF IN-BASED PERSONAL SERVICES" WORKSHOP RECORD, INTELLIGENT NETWORK, FREEDOM AND FLEXIBILITY: REALISING THE PROMISE OF INTELLIGENT NETWORK SERVICES, 21 April 1996, pages 1-12, XP002043670

## Description

### TECHNICAL FIELD OF THE INVENTION

The present invention concerns an apparatus and a method for controlling basic and supplementary subscriber service in a telephone system, in which a digital telephone exchange provides basic and supplementary service to the subscribers connected to the digital telephone exchange. The ordinary way of controlling the subscriber service system is provided by the subscriber using his common telephone device with a numeric keypad to generate the DTMF (dual tone multiple frequency) tones or corresponding messages in GSM or ISDN systems, e.g. DSS1 (digital subscriber signalling system no. one) messages, that are required to control the service. To control a relative simple service like Call Forwarding, the user has to enter a sequence of e.g. 13 characters, and more complicated services may require more characters when the subscriber procedure gets more complicated. It is in this connection that the present invention seeks to provide a more user-friendly control of the subscriber service, without removing the ordinary way of control.

### DESCRIPTION OF RELATED ART

WO 97/23988 describes control of supplementary subscriber service, using the Internet to provide a user-friendly interface to the control of these services. In the described system the services are provided by an intelligent network, which is distinct from the Public Switched Telephone Network (PSTN), and the only possibility of controlling the intelligent network is via the Internet connection.

WO 94/23523 describes a system of controlling the operation of a telephone exchange from a subscriber connection. A direct communication connection is established between a subscriber connection and a telephone exchange control unit in such a way that the subscriber can modify specific functions in the telephone exchange control unit. This system requires a separate control unit interface program to perform the requested modifications. The program must be executed by the telephone exchange control unit and accordingly puts an extra load on this unit.

WO 97/22211 describes the implementation and management of new services as intelligent network service scripts, whereas the present invention relates to a more user-friendly management of already implemented subscriber services.

WO 97/22209 and WO 97/22212 both describe the control of supplementary subscriber services provided by an intelligent network and different access possibilities to the intelligent network via Internet from the Public Switched Telephone Network and from the subscriber, respectively.

### SUMMARY

In connection with more complicated new supplementary subscriber services, longer series of characters are to be transmitted from the keypad on the ordinary telephone apparatus. Moreover, the subscriber using multiple supplementary subscriber services will easily get lost in the complexity of this system comprising different codes for the different supplementary subscriber services.

In view of this it is the intention of the present invention to provide an apparatus and a method for controlling the basic and supplementary services in a digital telephone exchange, the invention providing a supplement to the ordinary control, said supplement being more user-friendly. In accordance with the invention this is provided by a dedicated Internet access server connected to the digital telephone exchange. The server is providing a more user-freindly, e.g. graphical, interface for a subscriber who by means of a PC running a WWW-browser is connected to the server via the Internet. The Internet server is connected to the digital telephone exchange to control the basic and supplementary subscriber services by sending DTMF-tones or DSS1 messages to the digital telephone exchange in the same way as the ordinary telephone or ISDN-subscriber sends those DTMF-tones or DSS1 messages to the digital telephone exchange. The server merely emulates the ordinary telephone function and the digital telephone exchange receives the DTMF-tones or DSS1 messages in the same way as these tones or messages are received from a telephone apparatus and the digital telephone exchange uses the built-in functions for remote control of supplementary services for controlling the supplementary services in accordance with the orders received from the server.

The speed of the communication between the server and the digital telephone exchange is limited by the limited speed of detecting the DTMF-tones in the digital telephone exchange. This speed is limited by the necessicity of receiving at least forty milliseconds of DTMF-tones for detection of each tone. Moreover, the response from the digital telephone exchange is normally an announcement which is time-consuming to handle. Accordingly, the server does not use interrogation to check the current status of a service.

For ISDN connections, the DSS1 messages make it possible to interpret the response from the digital telephone exchange. In this case, it is possible for the server to receive information in the DSS1 protocol in order to check the current status of a service.

In this last case it will be necessary to modify the software of the digital telephone exchange in order to provide an interface for the server in accordance with the DSS1 protocol.

The invention is as set out in the independent claims 1 and 2.

### BRIEF DESCRIPTION OF THE DRAWINGS

In the following, various aspects for the invention will be explained referring to the enclosed drawing, showing exemplary embodiments of the invention, in which:
Figure 1 is a schematic block diagram showing a WWW-access to a digital telephone exchange in accordance with the invention, and
Figure 2 is a more detailed block diagram of parts of the system in accordance with Figure 1.

### DETAILED DESCRIPTION OF EMBODIMENTS

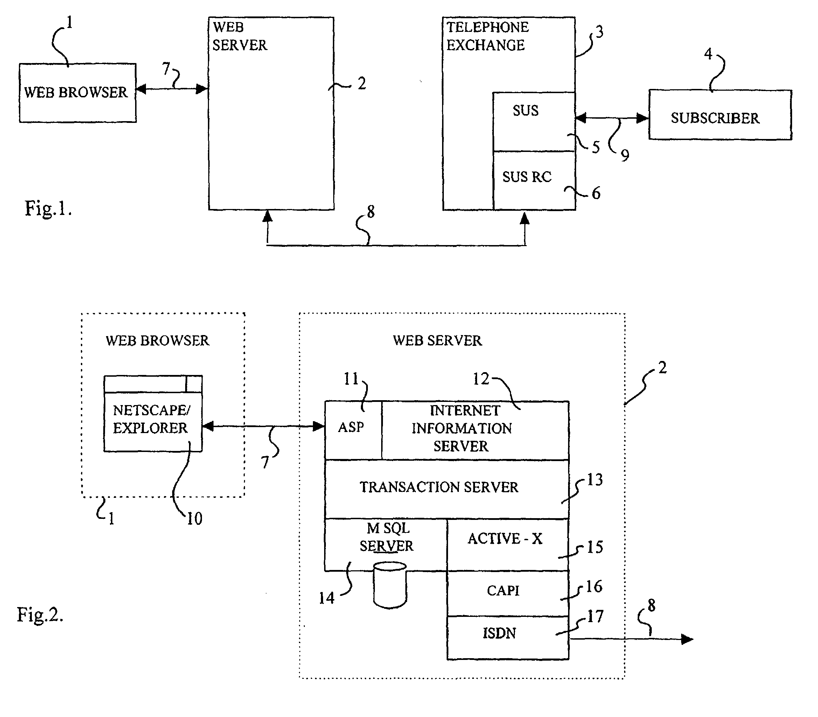

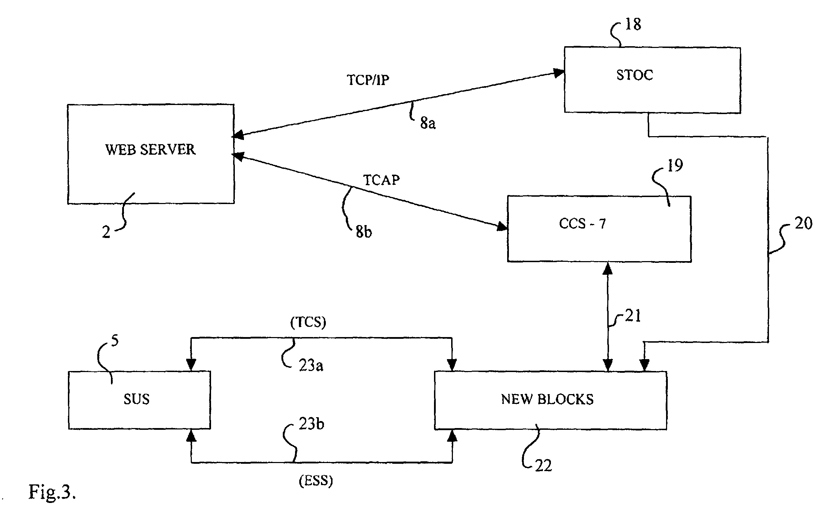

In the embodiment shown in Figure 1, the remote control of the basic and supplementary service is implemented using an Internet server 2 which is communicating with a world wide web browser. The communication between the world wide web browser and the Internet server is provided via a connection 7 which normally will comprise the Internet. The Internet server 2 provides the subscriber with a user-friendly, e.g. graphical, interface to the services which the subscriber wants to control from his PC. The functions of the world wide web browser and the Internet server in this connection are not part of the invention and function in a manner which is known per se.

In the embodiment shown in Figures 1 and 2, the connection between the Internet server 2 and the digital telephone exchange 3 is made using a telephone line connection 8 between the server and the exchange. Through this connection 8 the server sends orders in the form of DTMF-tones to the digital telephone exchange 3. These orders are received by a system for remote control of supplementary services 6 which is provided in the digital telephone exchange 3 for connection of subscribers to the supplementary services 5 from another telephone than the subscriber's own telephone. This remote control of supplementary services 6 controls the supplementary services in the module 5 in the ordinary way, so that no changes have to be made in the digital telephone exchange 3 as such. The subscriber 4 is connected to the telephone exchange 3 via an ordinary telephone line 9 which, as is shown, is able to communicate with this module for the supplementary services 5.

As shown in more detail in Figure 2, the Internet server comprises different software blocks 11-17 for communicating via the Internet in HTML protocol and for handling the subscriber orders received from the Internet and converting these orders into DTMF-tones which are sent via one of thirty lines 8 connected to the telephone exchange 3. Among other modules, the Internet server comprises a dedicated software package15 for each supplementary service supported by the system. In this way, it is possible to provide a new service support by supplying new software packages, and existing support of services can be modified by modifying the individual software packages.

In the embodiment shown in Figure 2, the modules of the Internet server comprise an ASP module 11 for handling the HTML communication via the Internet, an Internet information server 12, a transaction server 13, a MS SQL server 14, said software modules 15, a CAPI 16, and an ISDN connection 17 providing e.g. thirty lines of DTMF communication channels with the digital telephone exchange 3. The ISDN connection 17 may, as an alternative, use DSS1 messages.

In this way it is possible for the world wide web server 2 to get access to information regarding the current status of the subscriber's services and provide the subscriber with this information via the subscriber's world wide web browser connection. Furthermore, the orders sent from the subscriber's world wide web browser to the Internet server can be transmitted through the system to control the subscriber services in the supplementary subscriber service module 5.

## Claims

1. Apparatus for controlling basic and supplementary subscriber services in a telephone system comprising
- an Internet access server (2) for establishing communication with a subscriber via the Internet in order to receive instructions for the control of the basic and supplementary subscriber services,
the basic and supplementary subscriber services to be controlled being implemented in a digital telephone exchange (3) comprising
- a supplementary subscriber service system (5) providing basic and supplementary services to the subscribers (4) connected to the digital telephone exchange (3), and a remote control system (6) for controlling the basic and supplementary subscriber services from a subscriber connection, in which remote control system (6) the subscriber communicates orders to the supplementary subscriber service system (5) in the form of DTMF-tones generated by depressing pushbuttons on his telephone apparatus or corresponding messages in GSM or ISDN systems, e.g. DSS1 messages, and the supplementary subscriber service system (5) communicates requests and/or messages to the subscriber, e.g. in the form of stored voice messages,
said Internet access server (2) being a dedicated Internet access server (2) connected (8) to the digital telephone exchange (3) in such a way that the Internet access server (2) can control the supplementary subscriber service system (5) in accordance with the instructions received from a subscriber via the Internet access (7) **characterized in that** the connection (8) between the Internet access server (2) and the digital telephone exchange (3) is provided in such a manner that the Internet access server (2) controls the supplementary subscriber service system (5) by sending DTMF-tones or DSS1 messages to the digital telephone exchange (3), whereby the Internet access server (2) "emulates" the ordinary telephone generated control of the supplementary subscriber service system (5).

2. Method for controlling basic and supplementary services in a telephone system comprising the steps of
- providing an Internet access server (2),
- receiving instructions from subscribers in the Internet access server (2),
- using said instructions to control said basic and supplementary services,
- providing a digital telephone exchange, in which the basic and supplementary services to be controlled are implemented,
- providing a remote control system (6) for controlling services from a subscriber connection, the subscriber communicating orders to control the basic and supplementary services in the form of DTMF-tones generated by depressing pushbuttons on his telephone apparatus or corresponding messages in GSM or ISDN systems, e.g. DSS1 messages and the digital telephone exchange communicating requests and/or messages to the subscriber, e.g. in the form of stored voice messages
- connecting the Internet access server (2) to the digital telephone exchange (3) in such a way that the Internet access server can control the basic and supplementary services implemented in the digital telephone exchange (3),
**characterized by** comprising the further steps of:
- converting the instructions received from the subscriber in the Internet access server (2) to orders in a format acceptable for delivery to the digital telephone exchange (3), said format being dual tone multiple frequency tones (DTMF-tones) or DSS1 messages, and
- delivering these orders to the digital telephone exchange (3), thereby controlling the basic and supplementary services.

## Patentansprüche

1. Gerät zur Steuerung der Grund- und Zusatzteilnehmerdienste in einem Telefonsystem, bestehend aus
- einem Internetzugriffsserver (2) zum Aufbau einer Verbindung mit einem Teilnehmer über das Internet, um Befehle zur Steuerung der Grund- und Zusatzteilnehmerdienste zu empfangen,
wobei die zu steuernden Grund- und Zusatzteilnehmerdienste in einem digitalen Telefonvermittlungsamt (3) implementiert sind, umfassend
- ein Zusatzteilnehmerdienstsystem (5), das den an das digitale Vermittlungsamt (3) angeschlossenen Teilnehmern (4) Grund- und Zusatzdienste liefert, und ein Fernsteuersystem (6) zur Steuerung der Grund- und Zusatzteilnehmerdienste von einem Teilnehmeranschluss aus, in welchem Fernsteuersystem (6) der Teilnehmer dem Zusatzteilnehmerdienstsystem (5) in Form von DTMF-Tönen, die durch Drücken von Tasten an seinem Telefonapparat erzeugt werden, oder entsprechenden Nachrichten in GSM- oder ISDN-Systemen, zum Beispiel DSS1-Nachrichten, Befehle mitteilt, und das Zusatzteilnehmerdienstsystem (5) dem Teilnehmer Anforderungen und/oder Nachrichten, zum Beispiel in Form gespeicherter Sprachnachrichten, mitteilt,
wobei der Internetzugriffsserver (2) ein spezieller Internetzugriffsserver (2) ist, der an das digitale Telefonvermittlungsamt (3) derart angeschlossen ist, dass er Internetzugriffsserver (2) das Zusatzteilnehmerdienstsystem (5) entsprechend den Befehlen steuern kann, die von einem Teilnehmer über den Internetzugang (7) empfangen werden, **dadurch gekennzeichnet, dass** der Anschluss (8) zwischen dem Internetzugriffsserver (2) und dem digitalen Telefonvermittlungsamt (3) in der Weise vorgesehen ist, dass der Intemetzugriffsserver (2) das Zusatzteilnehmerdienstsystem (5) durch Senden von DTMF-Tönen oder DSS1-Nachrichten an das digitale Telefonvermittlungsamt (3) steuert, so dass der Internetzugriffsserver (2) die übliche durch das Telefon bewirkte Steuerung des Zusatzteilnehmerdienstsystems (5) "emuliert".

2. Verfahren zur Steuerung der Grund- und Zusatzdienste in einem Telefonsystem, umfassend die folgenden Schritte:
- Vorsehen eines Intemetzugriffsservers (2),
- Empfangen von Befehlen von Teilnehmern im Internetzugriffsserver (2),
- Verwenden der Befehle zur Steuerung der Grund- und Zusatzdienste,
- Vorsehen eines digitalen Telefonvermittlungsamtes, in dem die zu steuernden Grund- und Zusatzdienste implementiert sind,
- Vorsehen eines Fernsteuersystems (6) zur Steuerung von Diensten von einem Teilnehmeranschluss aus, wobei der Teilnehmer Befehle überträgt, um die Grund- und Zusatzdienste zu steuern, in Form von DTMF-Tönen, die durch Drücken von Tasten an seinem Telefonapparat erzeugt werden oder entsprechenden Nachrichten in GSM- oder ISDN-Systemen, zum Beispiel DSS1-Nachrichten, und das digitale Telefonvermittlungsamt Anforderungen und/oder Nachrichten an den Teilnehmer, zum Beispiel in Form von gespeicherten Sprachnachrichten, überträgt,
- Verbinden des Internetzugriffsservers (2) mit dem digitalen Telefonvermittlungsamt (3) derart, dass der Internetzugriffsserver die Grundund Zusatzdienste, die im digitalen Telefonvermittlungsamt (3) implementiert sind, steuern kann,
**gekennzeichnet durch** Aufweisen der folgenden Schritte:
- Umwandeln der vom Teilnehmer im Internetzugriffsserver (2) empfangenen Befehle in Befehle in einem Format, das für die Ausgabe an das digitale Telefonvermittlungsamt (3) akzeptierbar ist, wobei das Format aus Doppelton-Mehrfrequenztönen (DTMF-Tönen) oder DSS1-Nachrichten besteht, und
- Übergeben dieser Befehle an das digitale Telefonvermittlungsamt (3), wodurch die Grund- und Zusatzdienste gesteuert werden.

## Revendications

1. Appareil de commande de services de base et supplémentaires à l'abonné dans un système téléphonique comprenant :
- un serveur d'accès à Internet (2) permettant d'établir une communication avec un abonné par l'intermédiaire d'Internet afin de recevoir des instructions pour la commande de services de base et supplémentaires à l'abonné,
les services de base et supplémentaires à l'abonné devant être commandés étant mis en oeuvre dans un central téléphonique numérique (3) comprenant :
- un système de service supplémentaire à l'abonné (5) fournissant des services de base et supplémentaires aux abonnés (4) connectés au central téléphonique numérique (3), et un système de commande à distance (6) permettant de commander les services de base et supplémentaires à l'abonné à partir d'une connexion à l'abonné, dans lequel système de commande à distance (6) l'abonné communique des ordres au système de services supplémentaires à l'abonné (5) sous la forme de tonalités DTMF (double tonalité à fréquence multiple) générées en appuyant sur des touches prévues sur son appareil téléphonique ou en envoyant des messages dans des systèmes GSM ou RNIS, par exemple des messages DSS1 et le système de services supplémentaires à l'abonné (5) communique des requêtes et/ou des messages à l'abonné, par exemple sous la forme de messages vocaux enregistrés,
ledit serveur d'accès à Internet (2) étant un serveur d'accès à Internet (2) dédié, connecté (8) au central téléphonique numérique (3) de telle manière que le serveur d'accès à Internet (2) peut commander le système de services supplémentaires à l'abonné (5) selon les instructions reçues d'un abonné par l'intermédiaire de l'accès à Internet (7), **caractérisé en ce que** la connexion (8) entre le serveur d'accès à Internet (2) et le central téléphonique numérique (3) est fournie de telle manière que le serveur d'accès à Internet (2) commande le système de services supplémentaires à l'abonné (5) en envoyant des tonalités DTMF ou des messages DSS1 au central téléphonique numérique (3), grâce à quoi le serveur d'accès à Internet (2) « émule » la commande générée par le téléphone ordinaire du système de services supplémentaires à l'abonné (5).

2. Procédé de commande de services de base et supplémentaires dans un système téléphonique comprenant les étapes consistant à :
- fournir un serveur d'accès à Internet (2),
- recevoir des instructions d'abonnés dans le serveur d'accès à Internet (2),
- utiliser lesdites instructions pour commander lesdits services de base et supplémentaires,
- fournir un central téléphonique numérique, dans lequel les services de base et supplémentaires qui doivent être commandés sont mis en oeuvre,
- fournir un système de commande à distance (6) permettant de commander les services à partir d'une connexion d'abonné, l'abonné communiquant des ordres pour commander les services de base et supplémentaires sous la forme de tonalités DTMF générées en appuyant sur des touches prévues sur son appareil téléphonique ou en envoyant des messages dans des systèmes GSM ou RNSI, par exemple des messages DSS1 et le central téléphonique numérique communiquant les requêtes et/ou les messages à l'abonné, par exemple sous la forme de messages vocaux enregistrés,
- connecter le serveur d'accès à Internet (2) au central téléphonique numérique (3) de telle manière que le serveur d'accès à Internet (2) puisse commander les services de base et supplémentaires mis en oeuvre dans le central téléphonique numérique (3),
**caractérisé en ce qu'**il comprend en outre les étapes consistant à :
- convertir les instructions reçues de l'abonné dans le serveur d'accès à Internet (2) en ordres dans un format acceptable pour la transmission au central téléphonique numérique (3), ledit format étant des tonalités multifréquence à deux tonalités (tonalités DTMF) ou des messages DSS1, et
- transmettre ces ordres au central téléphonique numérique (3), ce qui permet de commander les services de base et supplémentaires.
